# DEMANDE DE BREVET EUROPEEN

(11) **EP 1 908 614 A1**
(43) Date de publication de la demande: **09.04.2008**
(21) Numéro de dépôt: 07301403.7
(22) Date de dépôt: 27.09.2007
(51) Int. Cl.: B60H 1/00

(54) **Véhicule automobile comportant un groupe moto-ventilateur inversable et des moyens de détection d'une situation critique**

(30) Priorité: 06.10.2006 FR 0608812
(71) Demandeur: RENAULT S.A.S., 92100 Boulogne Billancourt (FR)
(72) Inventeur: Noel, Gilles, 78720 Saint Forget (FR)

(57) **Abrégé**

La présente invention concerne un véhicule automobile comportant un habitacle (5), un compartiment moteur (4) jouxtant l'habitacle (5), un moteur logé dans le compartiment moteur (4), un conduit d'aération (15) qui relie l'habitacle (5) à l'extérieur du véhicule en passant par le compartiment moteur (4), et un groupe moto-ventilateur (10) à ailettes (13) pour l'aspiration de l'air extérieur à travers le conduit d'aération (15) vers l'habitacle (5). Selon l'invention, le groupe moto-ventilateur (10) est inversable et le véhicule comporte des moyens de détection d'une situation critique (14), disposés dans le compartiment moteur (4), qui sont reliés au groupe moto-ventilateur (10) pour inverser le sens de rotation du groupe moto-ventilateur (10) quand une situation critique est détectée, moyennant quoi l'air situé dans l'habitacle (5) est refoulé vers l'extérieur du véhicule à travers le conduit d'aération (15).

## Description

La présente invention concerne un véhicule automobile comportant un groupe moto-ventilateur inversable et des moyens de détection d'une situation critique, qui permet, notamment, de retarder l'entrée des flammes et/ou des fumées lors d'un incendie dans le compartiment moteur du véhicule.

Tous les véhicules automobiles sont dotés d'un circuit d'aération qui permet à l'air extérieur d'entrer dans l'habitacle du véhicule. Ce circuit d'aération comporte une entrée d'air, située généralement au niveau du capot du véhicule, plus précisément au niveau de la grille d'auvent, qui relie le capot au pare-brise du véhicule. Une boite à eau, destinée à recueillir les eaux qui s'écoulent du pare-brise à travers la grille d'auvent, est disposée dans le compartiment moteur, sous la grille d'auvent. Cette boite à eau forme une portion d'un conduit d'aération qui relie l'extérieur du véhicule, au niveau de la grille d'auvent, à l'intérieur de l'habitacle du véhicule. Un groupe moto-ventilateur est placé, en général, dans l'habitacle, de manière à aspirer de l'air de l'extérieur du véhicule vers l'intérieur de l'habitacle, à travers le conduit d'aération précité. Le groupe moto-ventilateur comporte une turbine qui comprend une roue équipée d'une multitude d'ailettes radiales et actionnée par un moteur électrique. Le groupe moto-ventilateur peut, par exemple, être tel que décrit dans le document FR 2 859 579.

Si le conduit d'aération n'est pas étanche, lorsque le moteur du véhicule prend feu, les flammes et les fumées, dégagées par le moteur en feu, sont aspirées dans l'habitacle à travers le conduit d'aération, sous l'effet du flux d'air aspiré par le groupe moto-ventilateur. Ceci a pour effet de propager l'incendie dans l'habitacle.

Ce phénomène est particulièrement remarquable et dangereux lorsque la boite à eau comporte une cloison démontable, en matière plastique, qui vient prendre appui sur la face interne du capot, au niveau d'un joint. Une telle boite à eau permet d'éviter les blessures graves lors d'un choc avec un piéton, la cloison démontable se déformant au lieu de couper le piéton comme c'est le cas avec une boite à eau entièrement en métal. L'inconvénient d'une telle boite à eau est que, en cas d'incendie dans le compartiment moteur, la paroi démontable et le joint sont rapidement endommagés et les flammes et/ou les fumées du compartiment moteur pénètrent alors très rapidement dans l'habitacle, aspirés par le groupe moto-ventilateur à travers le conduit d'aération. Les occupants du véhicule n'ont alors plus le temps nécessaire pour s'extraire de l'habitacle.

Un but de la présente invention est de proposer un véhicule automobile comportant un système qui permet de retarder l'entrée des fumées et/ou des flammes dans l'habitacle, lors d'un incendie dans le compartiment moteur du véhicule.

Ce but est atteint au moyen d'un véhicule automobile comportant, de manière connue, un habitacle, un compartiment moteur jouxtant l'habitacle, un moteur logé dans le compartiment moteur, un conduit d'aération qui relie l'habitacle à l'extérieur du véhicule en passant par le compartiment moteur, et un groupe moto-ventilateur à ailettes pour l'aspiration de l'air extérieur, à travers le conduit d'aération, vers l'habitacle. De manière caractéristique, selon l'invention, le groupe moto-ventilateur est inversable et le véhicule comporte des moyens de détection d'une situation critique, disposés dans le compartiment moteur qui sont reliés au groupe moto-ventilateur pour inverser le sens de rotation du groupe moto-ventilateur quand une situation critique est détectée, moyennant quoi l'air situé dans l'habitacle est refoulé vers l'extérieur du véhicule à travers le conduit d'aération.

L'air refoulé par le conduit d'aération permet d'éviter à l'air contenu dans le compartiment moteur d'entrer dans l'habitacle.

Les moyens de détection peuvent augmenter la vitesse de rotation du groupe moto-ventilateur en sens inversé par rapport à la vitesse de rotation dans le sens d'aspiration de manière à refouler efficacement l'air vers l'extérieur du véhicule. Cette vitesse accrue n'a pas besoin d'être imprimée pendant un long laps de temps au groupe moto-ventilateur. Ainsi, il est possible de faire tourner le groupe moto-ventilateur a une vitesse entraînant sa dégradation pendant une ou deux minutes seulement, le temps pour les occupants de quitter le véhicule.

Afin d'augmenter le flux d'air refoulé, les ailettes du groupe moto-ventilateur peuvent être orientables et, dans ce cas, les moyens de détection commandent le changement d'orientation des ailettes de manière à accroître le flux d'air refoulé lorsque la situation critique est détectée. La fumée et/ou les flammes sont alors efficacement refoulées vers l'extérieur du véhicule par le conduit d'aération.

De préférence, le groupe moto-ventilateur comporte une alimentation en courant électrique indépendante du fonctionnement du moteur. Par exemple, le moteur du groupe moto-ventilateur peut être alimenté directement par la batterie du véhicule ou par une batterie disposée dans un endroit du véhicule autre que le compartiment moteur afin de garantir le fonctionnement du groupe moto-ventilateur même en cas de détérioration de la batterie et/ou du circuit électrique reliant le groupe moto-ventilateur à cette dernière. Ainsi, les détériorations occasionnées dans le compartiment moteur ne peuvent pas faire obstacle au fonctionnement du groupe moto-ventilateur lors d'une situation critique.

Le conduit d'aération peut comporter une portion formant boite à eau, en particulier si le conduit d'aération comporte une prise d'air située au niveau de la grille d'auvent du véhicule. La présente invention n'est néanmoins pas limitée à un conduit d'aération comportant une portion formant boite à eau.

En particulier, la portion formant boite à eau peut comprendre une cloison en matériau inflammable, par exemple, une cloison démontable en matière plastique, comme précédemment exposé.

La situation critique peut correspondre à une augmentation anormale de la température dans le compartiment moteur ou à la présence de flammes et/ou de fumées dans le compartiment moteur.

La présente invention, ses caractéristiques et les différents avantages qu'elle procure seront mieux compris à la lecture de la description qui suit d'un mode de réalisation, présenté à titre d'exemple non limitatif, et qui fait références aux dessins annexés, sur lesquels :
- la figure 1 représente une vue en coupe longitudinale d'une portion du véhicule selon l'invention, le groupe moto-ventilateur fonctionnant normalement, c'est-à-dire de manière à aspirer de l'air dans l'habitacle du véhicule ;
- la figure 2 représente la même vue que la figure 1, lors d'une situation critique, le groupe moto-ventilateur fonctionnant de manière à refouler l'air de l'habitacle vers le compartiment moteur du véhicule.

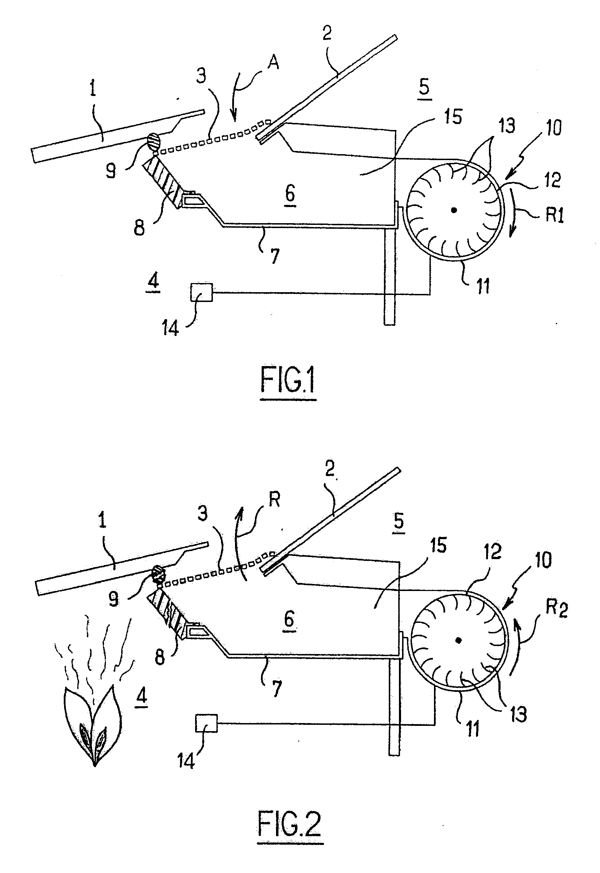

En référence à la figure 1, le véhicule de l'invention comporte un capot 1, un pare-brise 2 et une grille d'auvent 3, qui relie le bord supérieur du capot au bord inférieur du pare-brise 2. Le compartiment moteur 4 est séparé de l'habitacle 5 et se situe sous le capot 1 et la grille d'auvent 3. Une boite à eau 6 forme une portion du conduit d'aération 15 qui relie l'extérieur du véhicule, au niveau de la grille d'auvent 3, à l'habitacle 5. Cette boite à eau 6 est disposée dans le compartiment moteur 4, sous la grille d'auvent, et comporte un fond 7 en tôle métallique et une cloison démontable 8, en matière plastique inflammable, qui relie le fond 7 à la face interne du capot 1. Cette cloison démontable 8 est solidaire du bord du fond et prend appui sur la face interne du capot 1 au niveau d'un joint 9 qui traverse la grille d'auvent 3.

Comme représenté sur les figures 1 et 2, un groupe moto-ventilateur 10 est disposé dans l'habitacle 5, à l'extrémité ouverte du conduit d'aération 15. Ce groupe moto-ventilateur 10 comporte un boîtier 11 contenant une turbine 12 qui comporte une roue garnie d'une multitude d'ailettes radiales 13. La turbine 12 est actionnée en rotation par un moteur (non représenté). Des moyens de détection d'une situation critique 14 sont disposés dans le compartiment moteur 4 et sont reliés au moteur de la turbine 12.

Le fonctionnement normal est représenté sur la figure 1. Le groupe moto-ventilateur 10 aspire l'air extérieur au véhicule à travers la grille d'auvent 3. Le flux d'air aspiré, représenté par la flèche A, traverse le conduit d'aération 15 et pénètre dans le groupe moto-ventilateur 10 qui le rejette dans l'habitacle 5. La turbine 12 tourne dans un sens d'aspiration représenté par la flèche R1.

La figure 2 représente le fonctionnement du véhicule de l'invention lors d'une situation critique. Lorsque le moteur prend feu, les flammes ou tout simplement la chaleur font fondre le joint 9 et/ou la cloison démontable en matière plastique 8. L'habitacle 5 communique ainsi avec le compartiment moteur 4 du fait de la dégradation d'une portion de la boite à eau 6. Les flammes du compartiment moteur 4 peuvent donc être entraînées dans l'habitacle 5 par le flux d'air A aspiré par le groupe moto-ventilateur 10. Dès l'apparition de fumée et/ou de flammes, les moyens de détection d'une situation crique 14 inversent la rotation du moteur du groupe moto-ventilateur 10, qui entraîne alors la turbine 12 dans le sens inverse au sens d'aspiration. La turbine 12 tourne alors dans le sens inverse de l'aspiration (représenté par la flèche R2) et refoule ainsi l'air contenu dans l'habitacle 5 (le flux refoulé est représenté par la flèche R) dans le conduit d'aération 15. L'air ainsi refoulé vers le compartiment moteur 4 et vers l'extérieur du véhicule permet de retarder l'entrée des flammes et/ou de la fumée dans l'habitacle 5, laissant aux occupants du véhicule le temps de sortir de ce dernier.

Selon un mode de réalisation particulier, non représenté, les ailettes 13 de la turbine 12 sont orientables et les moyens de détection d'une situation critique 14 inversent également l'orientation des ailettes en même temps que le sens de rotation de la turbine 12 de manière à accroître le flux d'air refoulé lorsque une situation critique a été détectée. Le flux d'air refoulé R est alors augmenté et les flammes et/ou la fumée sont refoulées vers l'extérieur du véhicule à travers la grille d'auvent 3.

## Revendications

1. Véhicule automobile comportant un habitacle (5), un compartiment moteur (4) jouxtant l'habitacle (5), un moteur logé dans ledit compartiment moteur (4), un conduit d'aération (15) qui relie ledit habitacle (5) à l'extérieur dudit véhicule en passant par ledit compartiment moteur (4), et un groupe moto-ventilateur (10) à ailettes (13) pour l'aspiration de l'air extérieur à travers ledit conduit d'aération (15) vers ledit habitacle (5), **caractérisé en ce que** ledit groupe moto-ventilateur (10) est inversable et **en ce que** ledit véhicule comporte des moyens de détection d'une situation critique (14), disposés dans ledit compartiment moteur (4), qui sont reliés audit groupe moto-ventilateur (10) pour inverser le sens de rotation dudit groupe moto-ventilateur (10) quand une situation critique est détectée, moyennant quoi l'air situé dans ledit habitacle (5) est refoulé vers l'extérieur dudit véhicule à travers ledit conduit d'aération (15).

2. Véhicule automobile selon la revendication 1, **caractérisé en ce que** lesdits moyens de détection (14) augmentent la vitesse de rotation dudit groupe moto-ventilateur (10) en sens inversé par rapport à la vitesse de rotation dans le sens d'aspiration.

3. Véhicule automobile selon la revendication 1 ou 2, **caractérisé en ce que** les ailettes (13) dudit groupe moto-ventilateur (10) sont orientables et **en ce que** lesdits moyens de détection (14) commandent le changement d'orientation desdites ailettes (13) de manière à accroître le flux d'air refoulé lorsque la situation critique est détectée.

4. Véhicule selon l'une quelconque des revendications 1 à 3, **caractérisé en ce que** ledit groupe moto-ventilateur (10) comporte une alimentation en courant électrique indépendante du fonctionnement dudit moteur.

5. Véhicule selon l'une quelconque des revendications 1 à 4, **caractérisé en ce que** ledit conduit d'aération (15) comporte une portion formant boite à eau (6).

6. Véhicule selon la revendication 5, **caractérisé en ce que** ladite portion formant boite à eau (6) comporte une cloison (8) en matériau inflammable.

7. Véhicule selon l'une quelconque des revendications 1 à 6, **caractérisé en ce que** ladite situation critique correspond à la présence de flammes et/ou de fumées dans ledit compartiment moteur (4).
